# EUROPEAN PATENT SPECIFICATION

(11) **EP 2 270 907 B1**
(45) Date of publication and mention of the grant of the patent: **13.06.2012**
(21) Application number: 10151209.3
(22) Date of filing: 20.01.2010
(51) Int. Cl.: H01M 4/92, H01M 4/88

(54) **Catalyst for fuel cell, fuel cell system and associated methods**
Katalysator für Brennstoffzelle, Brennstoffzellensystem und zugehörige Verfahren
Catalyseur pour pile à combustible, système de pile à combustible et procédés connexes

(30) Priority: 05.06.2009 KR 20090050031
(43) Date of publication of application: 05.01.2011
(73) Proprietor: Samsung SDI Co., Ltd., Gyeonggi-do (KR)
(72) Inventor: Min, Myoung-Ki, Gyeonggi-do (KR); Chai, Geun-Seok, Gyeonggi-do (KR); Kim, Hee-Tak, Gyeonggi-do (KR); Kim, Tae-Yoon, Gyeonggi-do (KR); Han, Sang-II, Gyeonggi-do (KR); Cho, Sung-Yong, Gyeonggi-do (KR); Song, Kah-Young, Gyeonggi-do (KR)
(74) Representative: Killin, Stephen James

(56) References cited:
- EP-A2- 0 386 764
- WO-A2-2005/024982
- US-A- 5 189 005

## Description

The present invention relates to a catalyst for a fuel cell, a fuel cell system including the same, and a method of preparing the same.

A fuel cell is a power generation system for producing electrical energy through an electrochemical oxidation-reduction (redox) reaction of an oxidant and hydrogen from a hydrocarbon-based material, e.g., methanol, ethanol, or natural gas. Such a fuel cell may be a clean energy source that may replace fossil fuels. The fuel cell may include a stack having unit cells and may produce various ranges of power output. Because the fuel cell may have four to ten times higher energy density than a lithium battery, it has been highlighted as a small portable power source.

Fuel cells may include a polymer electrolyte membrane fuel cell (PEMFC) and a direct oxidation fuel cell (DOFC). The direct oxidation fuel cell may include a direct methanol fuel cell (DMFC) that uses methanol as a fuel. The polymer electrolyte fuel cell may have a high energy density and high power output, but also may require careful handling of hydrogen gas. Also, accessory facilities, e.g., a fuel reformer for reforming methane or methanol, natural gas, and the like, may be needed to produce hydrogen.

The present invention provides a catalyst for a fuel cell having high performance and stability.

WO2005/024982 discloses a composition for use as a catalyst, the composition comprising platinum and copper, wherein the concentration of platinum is greater than 50 atomic percent and less than about 80 atomic percent and wherein the composition has a particle size which is less than 35 angstroms.

EP0386764 discloses a platinum alloy electrocatalyst comprising an electrically conductive carrier and a platinum-iron-cobalt-copper quaternary ordered alloy composed of 40 to 70 atomic % of platinum, 9 to 27 atomic % of iron, 9 to 27 atomic % of cobalt and 9 to 27 atomic % of copper.

US5189005 discloses a platinum alloy catalyst comprising an electroconductive support and platinum-nickel-cobalt alloy particles having an ordered structure supported on the electroconductive support.

Accordingly, in a first aspect of the present invention, there is provided a catalyst for a fuel cell including a binary alloy consisting of platinum and cobalt having a face-centred tetragonal structure, and a carrier, wherein the binary alloy shows a broad peak or a doublet at a 2θ value of about 65 to 75 degrees in an XRD pattern using a Cu-Kα line, and the binary alloy is supported by the carrier and has an average particle size of about 1.5 nm to 5 nm.

The binary alloy may include platinum and cobalt at a mole ratio of about 0.67:1 to 1.5:1.

The binary alloy may have an average particle size of about 1.5 nm to 3 nm.

The binary alloy may have a lattice constant of a = about 3.780 to 3.880 Å and c = about 3.650 to 3.810 Å.

The binary alloy may be present in an amount of about 20 to 50 wt%, based on the total weight of alloy and carrier.

The carrier may include at least one of a carbon-based material and an inorganic particulate, the carbon-based material including at least one of graphite, denka black, ketjen black, acetylene black, carbon nanotubes, carbon nanofiber, carbon nanowire, carbon nanoballs, and activated carbon, and the inorganic particulate including at least one of alumina, silica, zirconia, and titania. The catalyst may be used in a polymer electrolyte membrane fuel cell.

In a second aspect of the present invention, there is provided a fuel cell system including a fuel supplier configured to supply a mixed fuel of fuel and water, a reformer configured to reform the mixed fuel and generate hydrogen gas, a stack configured to generate electric energy by performing an electrochemical reaction between the hydrogen gas supplied from the reforming part and an oxidizing agent, the stack having a catalyst according to the present invention in its first aspect, and an oxidizing agent supplier configured to supply the oxidizing agent to the reformer and the stack.

The binary alloy may include platinum and cobalt at a mole ratio of about 0.67:1 to 1.5:1.

The binary alloy may have an average particle size of about 1.5 nm to 3 nm.

The binary alloy may have a lattice constant of a = about 3.780 to 3.880 Å and c = about 3.650 to 3.810 Å.

The binary alloy may be included in the catalyst in an amount of about 20 to 50 wt% based on the total amount of alloy and carrier.

The carrier may include at least one of a carbon-based material and an inorganic particulate, the carbon-based material including at least one of graphite, denka black, ketjen black, acetylene black, carbon nanotubes, carbon nanofiber, carbon nanowire, carbon nanoballs, and activated carbon and the inorganic particulate including at least one of alumina, silica, zirconia, and titania.

The stack may form a polymer electrolyte membrane fuel cell.

In a third aspect of the present invention, there is provided a method of preparing a catalyst for a fuel cell according to the invention in its first aspect, including mixing a platinum raw material and a cobalt raw material in a solvent to provide a mixture, adding a carrier to the mixture, drying the mixture and carrier, and heating the dried mixture and carrier at a temperature of about 200 °C to 700 °C to produce a catalyst having a face-centred tetragonal structure.

Heating the dried mixture and carrier may include heating in a gas atmosphere including hydrogen.

The gas atmosphere may include about 5 to 100 volume% of hydrogen.

Heating the dried mixture and carrier may include heating under the gas atmosphere including hydrogen for about 0.5 to 10 hours.

A catalyst for a fuel cell obtainable by the method according to the present invention in its third aspect is also described.

Further embodiments of the present invention, in any of its various aspects, are as described below or as defined in the sub-claims.

A more complete appreciation of the present invention, and many of the attendant advantages thereof, will be readily apparent as the same becomes better understood by reference to the following detailed description when considered in conjunction with the accompanying drawings, wherein:
FIG. 1 illustrates a schematic diagram of a fuel cell system in accordance with an embodiment of the present invention;
FIG. 2 illustrates an exploded perspective view of a stack of a fuel cell system in accordance with an embodiment of the present invention;
FIG. 3 illustrates a graph of an X-ray diffraction (XRD) pattern of the catalyst according to Example 1;
FIG. 4 illustrates a graph of an XRD pattern of the catalyst according to Example 2;
FIG. 5 illustrates a graph of an XRD pattern of the catalyst according to Example 3;
FIG. 6 illustrates a graph of an XRD pattern of the catalyst according to Comparative Example 1;
FIG. 7 illustrates a graph of an XRD pattern of the catalyst according to Comparative Example 2;
FIG. 8 illustrates a graph of an XRD pattern of the catalyst according to Comparative Example 3; and
FIG. 9 illustrates a graph of voltage-current of the fuel cells according to Examples 1 to 3 and Comparative Examples 1 to 3.

In the drawing figures, the dimensions of layers and regions may be exaggerated for clarity of illustration. It will also be understood that when a layer is referred to as being "between" two layers, it can be the only layer between the two layers, or one or more intervening layers may also be present. Like reference numerals refer to like elements throughout.

In the polymer electrolyte fuel cell, a stack that generates electricity may include several unit cells stacked in multiple layers. Each unit cell may include a membrane-electrode assembly (MEA) and a separator (also referred to as a bipolar plate). The membrane-electrode assembly may include an anode (also referred to as a "fuel electrode" or an "oxidation electrode") and a cathode (also referred to as an "air electrode" or a "reduction electrode"), which may be separated by a polymer electrolyte membrane.

Fuel may be supplied to the anode and adsorbed on catalysts of the anode. The fuel may be oxidized to produce protons and electrons. The electrons may be transferred into the cathode via an external circuit, and the protons may be transferred into the cathode through the polymer electrolyte membrane. In addition, an oxidant may be supplied to the cathode. Then, the oxidant, protons, and electrons may react on catalysts of the cathode to produce electricity along with water.

The catalyst used in the redox reaction of cathode may generally include platinum (Pt), but recently alloy catalysts have drawn attention as substitutes for the expensive platinum.

According to an aspect of the present invention, the catalyst for a fuel cell includes a binary platinum-metal alloy having a face-centred tetragonal structure. The metal is cobalt. The face-centred tetragonal structure may include platinum and cobalt, in a molar ratio of approximately 1:1. The structure is such that the metal is inserted into the lattice of the platinum. In other words, the platinum-metal alloy has a face-centred tetragonal structure.

When the platinum-metal alloy has the face-centred tetragonal structure, it may have excellent stability to, e.g., acid. For example, even if the alloy is agitated in a 1M sulfuric acid solution for one hour, it may have a very stable structure that is sufficient to avoid breaking. Accordingly, the catalyst may be stored for long time, due to its excellent stability to a sulfuric acid aqueous solution.

The platinum-metal alloy having the face-centred tetragonal structure has a broad peak or a doublet at a 2θ value of about 65 to 75 degrees in an X-Ray Diffraction (XRD) pattern using a Cu-K α line.

In the XRD pattern, the x-axis represents 2θ, and the y-axis represents the intensity of the peak. The broad peak may have a full width at half maximum, which is a full width at the point of 50% between the minimum and the maximum of the peak intensity, of about 4 degrees or more. The full width at half maximum may be about 4 to 5 degrees at a 2θ value of about 65 to 75 degrees.

The doublet may have a concave part having a minimum at a point of about 10 % to about 100 % of the peak intensity minimum at a 2θ value of about 65 to 75 degrees. In addition, the doublet may include a peak overlapping two peaks. The doublet may be either symmetrical or asymmetrical.

The full width at half maximum of the broad peak, the minimum of the concave part of the doublet, and the peak shape may be observed and measured by carrying out noise reduction (also referring to as "smoothing") one or more times. The noise reduction may be carried out 1 to 11 times. The noise may be reduced by using, e.g., an origin program, an X-pert program, and so on.

When metal is regularly inserted in a platinum lattice in a face-centred tetragonal structure, it may also show an ultra lattice peak in addition to the peak according to the face-centred tetragonal structure. Thus, it is understood that the ultra lattice peak indicates that platinum is highly and stably alloyed with the metal, and the high alloying degree may thereby be maintained at a lower temperature. The ultra lattice peak may be observed at least in part at a 2θ value of about 30 to 40 degrees and about 50 to 60 degrees in the XRD pattern using a Cu-K α line.

In order to provide the platinum-metal alloy with the desired structural characteristics, e.g., high alloying and stability, various manufacturing conditions may be beneficial. The alloy catalyst may generally refer to platinum being metal-bound with auxiliary metals. The structure of the alloy catalyst may be hard to control when two metals having different characteristics are mixed. In addition, it may be hard to uniformly maintain the bulk characteristic and the inter nano-particle characteristic, since it may be alloyed between nano-particles. Uniform manufacturing conditions, and various conditions will be described below.

According to the present invention, the catalyst includes a binary alloy consisting of Pt and Co. It may be easy to provide a regular alloy at around 650°C and it is possible to maintain a high alloying degree at a low temperature.

It is desirable to provide a mixed metal material having a uniform alloy composition in order to obtain a platinum-metal alloy having appropriate structural characteristics.

When the catalyst is uniformly alloyed in accordance with, e.g., a chemical method or irradiation, a distribution deviation at several parts is preferably less than about 5 % in terms of EDS (energy dispersive spectroscopy) or EPMA (electron probe micro analyzer) results.

The platinum-metal alloy may have a mixed mole ratio of platinum and total amount of cobalt of about 0.67:1 to 1.5:1. In other words, the mole ratio of Pt:Co may be about 0.67:1 to 1:1.5: Maintaining the mixed mole ratio of platinum and cobalt at about 0.67:1 to 1.5:1 may help ensure that the catalyst has the desired structural characteristics and may exhibit the ultra lattice peak, so the alloy catalyst may improve the high performance and stability. The mixed mole ratio may be about 0.8:1 to 1.2:1.

Activity of the catalyst for the fuel cell may be related to a specific surface area of the platinum-metal alloy. Accordingly, providing a platinum-metal alloy having an average nano-particle size that increases the specific surface area of the platinum-metal alloy may be desirable. The platinum-cobalt alloy according to the present invention has an average particle size of about 5 nm or less. Maintaining the particle size of the platinum-metal alloy at about 5 nm or less may help ensure that the catalyst efficiency is improved such that it may be heated at a high temperature, improving the alloying degree due to the fine sized catalyst. Also, the active surface area of platinum may be increased to improve the activity, so it is possible to provide a fuel cell with high performance. More specifically, the particle size of the platinum-cobalt alloy according to the present invention may be about 1.5 to 5 nm. The particle size may be about 1.5 to 3 nm.

The platinum-metal alloy may have lattice constants of a = about 3.780 to 3.880 A and c = about 3.650 to 3.810 A. Maintaining the lattice constants of the platinum-metal alloy at a = about 3.780 to 3.880 Å and c = about 3.650 to 3.810 A may help ensure that the catalyst is stably alloyed. The lattice constants may be: a = about 3.780 to 3.840 Å and c = about 3.680 to 3.750 Å.

The platinum-metal alloy is supported by a carrier. By supporting the alloy in a carrier, it is possible to decrease the catalyst particle size. Accordingly, it is possible to increase a reaction surface area of the catalyst.

The carrier may include, e.g., a carbon-based material including graphite, denka black, ketjen black, acetylene black, carbon nanotubes, carbon nanofiber, carbon nanowire, carbon nanoballs, and/or activated carbon, or inorganic material particulates including alumina, silica, zirconia, and/or titania. Carbon-based material may be used.

The platinum-metal alloy may be included in an amount of about 20 to 50 wt%, based on the total weight of alloy and carrier. Maintaining the amount of the platinum-metal alloy in the carrier at about 20 to 50 wt% may help ensure that it is possible to both use the catalyst in a polymer electrolyte membrane fuel cell (PEMFC) and to maintain the thickness of the catalyst layer at about 10 mm or less, thereby increasing the utilization rate of the catalyst. The alloy may be included in an amount of about 30 to 50 wt%.

When the platinum-metal alloy is supported by the carrier of carbon-based material, a mixed mole ratio of carbon-based material, platinum, and cobalt may be about 15.8:0.67:1 to 117:1.51:1. Maintaining the mixed mole ratio of the carbon-based material, platinum, and cobalt at about 15.8:0.67:1 to 11.7:1.51:1 may help ensure that it is possible to further improve performance and stability of the alloy catalyst The mixed mole ratio may be about 18:0.8:1 to 98:1.2:1.

The platinum-metal alloy supported in the carrier may have a surface area of about 30 to 120 m²/g. Maintaining the surface area of the alloy supported in the carrier at about 30 to 120 m²/g may help ensure that the catalyst exhibits the alloy effect and good stability. The surface area may be about 40 to 90 m²/g. In addition, in the alloy catalyst, the cobalt may occupy the position of the platinum to increase the surface area of the catalyst by the same amount as the platinum.

A catalyst according to an embodiment is fabricated according to the following method.

A black type of catalyst not supported in a carrier may be prepared by, e.g., mixing a platinum raw material with a cobalt raw material in a solvent to provide a mixture, drying the mixture, and heating the dried mixture.

According to the present invention, the catalyst supported in the carrier may be prepared by mixing a platinum raw material with a cobalt raw material in a solvent to provide a mixture, supporting the mixture in a carrier and drying the same, and then heating the same at a temperature of about 200 °C to 700 °C. Alternatively, a method may include previously supporting platinum in a carrier, mixing the carrier supported with platinum with a solution including a metal raw material to provide a mixture, covering the carrier supported with platinum with metal, and heating the same. The raw material mixture and carrier may be irradiated with, e.g., a proton beam.

The alloying process may be better performed by further adding a sodium (Na)-metal salt to the carrier, so as to make the carrier alkaline.

The platinum raw material may include, e.g., H₂PtCl₆, PtCl₂, PtBr₂, (NH₃)₂Pt(NO₂)₂, K₂PtCl₆, K₂PtCl₄, K₂[Pt(CN)₄]₃H₂O, K₂Pt(NO₂)₄, Na₂PtCl₆, Na₂[Pt(OH)₆], platinum acetyl acetonate, and/or ammonium tetrachloro platinate. In an embodiment, the platinum raw material includes H₂PtCl₆.

The metal raw material may include any suitable metal-included compound, e.g., a metal halide, a metal nitrate, a metal hydrochloride, a metal sulfate, a metal acetate, a metal amine, and so on. The metal raw material may include a metal nitrate or metal hydrochloride. According to the present invention, the metal raw material is a cobalt raw material.

The solvent may include, e.g., water, an alcohol such as methanol, ethanol, and isopropanol, or a mixture thereof.

The mixing ratio of the raw materials may be adjusted by considering the desired molar ratio of the metals in the final catalyst.

The drying process for the mixture to remove the solvent in the mixture may be performed by, e.g., ultra-sonication. In addition, pulverization may be performed after the drying process to provide a fine powdered mixture.

The heating process is performed at about 200 °C to 700 °C. Maintaining the temperature of the heating process at about 200°C to 700 °C may help ensure that the raw materials are sufficiently decomposed to provide a uniform alloy. The heating process may be performed at about 200 °C to 300 °C.

The heating process may be performed under a gas atmosphere including hydrogen. The gas atmosphere including hydrogen may include about 5 to 100 volume% of hydrogen and about 0 to 95 volume% of nitrogen. The gas atmosphere may include about 5 to 50 volume% of hydrogen and about 50 to 95 volume% of nitrogen. Generally, since platinum may exhibit hydrogen-philicity, the particle size may be increased under a heat and hydrogen atmosphere. However, the small particle size of platinum may be maintained by alloying under the gas atmosphere including about 5 to 100 volume% of hydrogen.

The gas atmosphere may further include carbon monoxide and humidified nitrogen, thereby preventing the particles from agglomerating and reducing poisoning of the platinum.

The heating process may be performed for about 0.5 to 10 hours. Performing the heating process at about 0.5 to 10 hours may help ensure ease of carrying out the process and maintenance of the small particle size. The heating process may be performed for about 1 to 5 hours.

After the heating process, the obtained product may be cooled. The cooling process may be performed in a slow process or quenching process. It may be beneficial to perform the cooling in a quenching process because it may provide a catalyst having an ultra lattice peak indicating, e.g., good alloying.

The quenching may be performed at a speed of about 10 to 50 °C/min. The cooling may be performed inside the reactor, rather than removing the reactants from the reactor. The product may be naturally cooled or may be cooled under a less cool condition. If the product is quickly quenched outside the reactor, it may cause problems in the reactor (heating furnace) or other safety problems. When the product is not quenched, it may cause it to naturally return to the original structure of the alloy catalyst.

After the heating process, a leaching step may be performed to selectively remove metal that is not alloyed. The leaching step may remove the metal that is not alloyed by adding an acid solution, e.g., sulfuric acid, phosphoric acid, and so on, to the alloy obtained after the heat treatment. The acid solution may have a concentration of about 0.5 to 3 M. Maintaining the concentration of the acid solution at about 0.5 to 3 M may help ensure that only metal that is not alloyed is removed. The concentration may be about 1 to 2 M. The leaching step may be performed for about 0.1 to 24 hours. Performing the leaching step for about 0.1 to 24 hours may help ensure that only the metal that is not alloyed is removed. The leaching step may be performed for about 0.5 to 5 hours.

It may be beneficial to adjust the thickness of the obtained catalyst of the catalyst layer to the reaction thickness (around 10 mm), so it is usable in a polymer electrolyte membrane fuel cell (PEMFC). In the case of a direct methanol fuel cell (DMFC), a lot of catalyst may be used to achieve the performance of the membrane-electrode assembly in a low carrying amount, thus the thickness of the catalyst layer may be thicker. Generally, the direct methanol fuel cell may include a catalyst supported in an amount of about 60 wt% or more.

The catalyst for a fuel cell may be included in a cathode.

According to the present invention it is possible to provide a platinum-cobalt catalyst having a face-centred tetragonal structure by controlling various conditions, so the platinum-cobalt catalyst may ensure desired high stability and performance. According to another aspect of the present invention, a fuel cell system including the catalyst for a fuel cell is provided, and is described below.

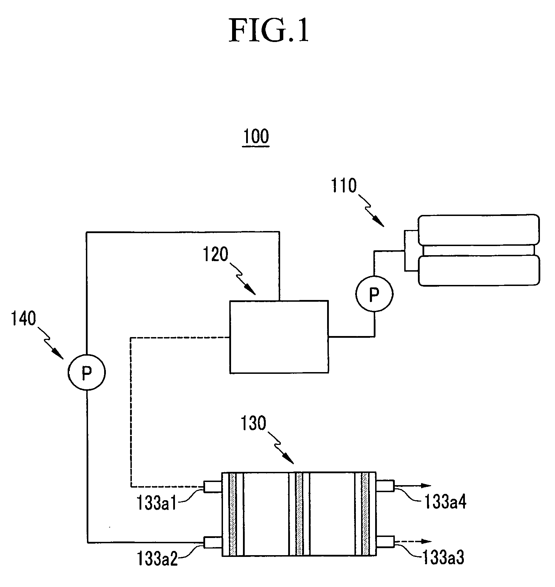

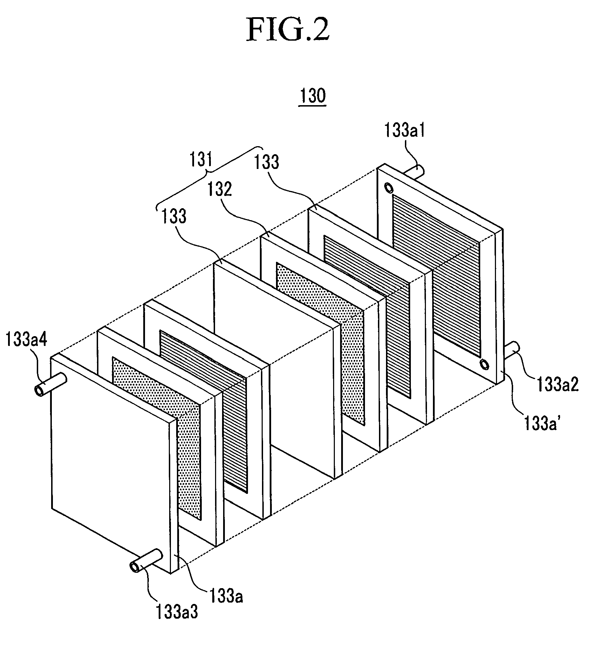

FIG. 1 illustrates a schematic diagram of a fuel cell system in accordance with an embodiment. FIG. 2 illustrates an exploded perspective view of a stack of a fuel cell system in accordance with an embodiment.

Referring to FIGS. 1 and 2, a fuel cell system 100 of an embodiment may include a fuel supplier 110 to supply a mixed fuel of fuel and water, a reformer 120 to reform the mixed fuel and generate hydrogen, a stack 130 having a catalyst to generate electrical energy by performing an electrochemical reaction on an oxidizing agent and the hydrogen gas supplied from the reformer, and an oxidizing agent supplier 140 to supply the oxidizing agent to the reformer 120 and the stack 130.

Furthermore, the fuel cell system 100 of an embodiment may include a plurality of unit cells 131 to induce an oxidation-reduction reaction between reforming gases, including hydrogen gas from the reformer 120 and oxygen from the oxidizing agent, to generate electrical energy.

Each unit cell 131 may serve as a unit for generating electricity and may include a membrane-electrode assembly 132 for oxidizing and reducing the reforming gases including hydrogen gas and oxygen from the oxidizing agent. Each unit cell may also include separators 133 (also referred to as bipolar plates) for supplying the hydrogen and oxidizing agent to the membrane-electrode assembly 132. The separators 133 may be arranged on sides of the membrane-electrode assembly 132. Separators that are respectively located at most exterior sides of the stack may be referred to as end plates 133a and 133a'.

The membrane-electrode assembly 132 may include an anode electrode and a cathode that form sides of the assembly and hold an electrolyte membrane therebetween.

The anode supplied with hydrogen gas through the separator 133 may include a catalytic layer that converts the hydrogen gas into electrons and hydrogen ions via an oxidation reaction and a gas diffusion layer that smoothly moves the electrons and hydrogen ions.

The cathode supplied with oxidizing agents through the separator 133 may include a catalytic layer that converts oxygen from oxidizing agents into electrons and oxygen ions via a reduction reaction and a gas diffusion layer that smoothly moves the electrons and oxygen ions. The electrolyte membrane may be a solid polymer electrolyte and may be about 10 to 200 µm-thick. The electrolyte membrane may serve as an ion exchanging membrane that moves the hydrogen ions generated from the catalytic layer of the anode to the catalytic layer of the cathode.

The catalyst of the catalyst layer may include the binary alloy according to the invention in its first aspect.

The end plate 133a of the separators may include a first supply tube 133a1 having a pipe shape for injecting the hydrogen gas from the reformer and a second supply tube 133a2 having a pipe shape for injecting the oxygen gas. The other end plate 133a' may include a first discharge tube 133a3 for discharging the remaining hydrogen gas that does not react in the plurality of unit cells 131 to the outside and a second discharge tube 133a4 for discharging the remaining oxidizing agent that does not react in the plurality of unit cells 131 to the outside.

The fuel cell system may improve the performance because the catalyst having high performance and stability is employed.

The following examples illustrate the embodiments in detail. These examples, however, should not in any sense be interpreted as limiting the scope.

### Manufacturing Catalyst for Fuel Cell

### Example 1

In order to provide an alloy catalyst in which platinum (Pt) and cobalt (Co) were present in a molar ratio of 1:1, a platinum acid solution (H₂PtCl₆, Aldrich) and cobalt nitrate (Co(NO₃)₂, Aldrich) were dissolved in distilled water in a molar ratio. A catalyst carrier of ketjen black was then dispersed at 50 wt% and irradiated to provide a catalyst. The irradiation source was a proton beam, and the solution was irradiated with energy of 45 MeV, 5 µA, for 10 minutes. The catalyst was dried at 100 °C for one hour and heated at 300 °C for one hour under a mixed gas of hydrogen and nitrogen (10 volume% of hydrogen, 90 volume% of nitrogen) to provide a catalyst for a fuel cell. The obtained catalyst had an average particle size of 3 nm, a face-centred tetragonal structure, and a lattice constant of a=3.796 Å and c=3.680 Å.

### Example 2

In order to provide an alloy catalyst in which platinum (Pt) and cobalt (Co) were present in a molar ratio of 1:1, a platinum acid solution (H₂PtCl₆, Aldrich) and cobalt nitrate (Co(NO₃)₂, Aldrich) were dissolved in distilled water in a molar ratio. A catalyst carrier of ketjen black was then dispersed at 50 wt% and irradiated to provide a catalyst. The irradiation source was a proton beam, and the solution was irradiated with energy of 45 MeV, 5 µA, for 10 minutes. The catalyst was dried at 100 °C for one hour and heated at 200 °C for one hour under a mixed gas of hydrogen and nitrogen (10 volume% of hydrogen, 90 volume% of nitrogen) to provide a catalyst for a fuel cell. The obtained catalyst had an average particle size of 2.7 nm, a face-centred tetragonal structure, and a lattice constant of a=3.802 Å and c=3.780 A.

### Example 3

In order to provide an alloy catalyst in which platinum (Pt) and cobalt (Co) were present in a molar ratio of 1:1, a platinum acid solution (H₂PtCl₆, Aldrich) and cobalt nitrate (Co(NO₃)₂, Aldrich) were dissolved in distilled water in a molar ratio. A catalyst carrier of ketjen black was then dispersed at 50 wt% and irradiated to provide a catalyst. The irradiation source was a proton beam, and the solution was irradiated with energy of 45 MeV, 5 µA, for 10 minutes. The catalyst was dried at 100°C for one hour and heated at 650 °C for one hour under a mixed gas of hydrogen and nitrogen (10 volume% of hydrogen, 90 volume% of nitrogen) to provide a catalyst for a fuel cell. The obtained catalyst had an average particle size of 5 nm, a face-centred tetragonal structure, and a lattice constant of a=3.790 Å and c=3.680 Å.

### Comparative Example 1

In order to provide an alloy catalyst in which platinum (Pt) and cobalt (Co) were present in a molar ratio of 1:1, a platinum acid solution (H₂PtCl₆, Aldrich) and cobalt nitrate (Co(NO₃)₂, Aldrich) were dissolved in distilled water in a molar ratio. A catalyst carrier of ketjen black was then dispersed at 50 wt% and irradiated to provide a catalyst. The irradiation source was a proton beam, and the solution was irradiated with energy of 45 MeV, 5 µA, for 10 minutes. The catalyst was dried at 100 °C for one hour and heated at 150 °C for one hour under a mixed gas of hydrogen and nitrogen (10 volume% of hydrogen, 90 volume% of nitrogen) to provide a catalyst (PtCo_{1.5}) for a fuel cell. The obtained catalyst had an average particle size of 2.7 nm, a face centred cubic structure, and a lattice constant of a=3.910 Å.

### Comparative Example 2

In order to provide an alloy catalyst in which platinum (Pt) and cobalt (Co) were present in a molar ratio of 1:1, a platinum acid solution (H₂PtCl₆, Aldrich) and cobalt nitrate (Co(NO₃)₂, Aldrich) were dissolved in distilled water in a molar ratio. A catalyst carrier of ketjen black was then dispersed at 50 wt% and irradiated to provide a catalyst. The irradiation source was a proton beam, and the solution was irradiated with energy of 45 MeV, 5 µA, for 10 minutes. The catalyst was dried at 100 °C for one hour and heated at 900 °C for one hour under a mixed gas of hydrogen and nitrogen (10 volume% of hydrogen, 90 volume% of nitrogen) to provide a catalyst (PtCo₉) for a fuel cell. The obtained catalyst had an average particle size of 10 nm, a face-centred tetragonal structure, and a lattice constant of a=3.802 Å and c=3.780 Å.

### Comparative Example 3

In order to provide an alloy catalyst in which platinum (Pt) and cobalt (Co) were present in a molar ratio of 3:1, a platinum acid solution (H₂PtCl₆, Aldrich) and cobalt nitrate (Co(NO₃)₂, Aldrich) were dissolved in distilled water in a molar ratio. A catalyst carrier of ketjen black was then dispersed at 50 wt% and irradiated to provide a catalyst. The irradiation source was a proton beam, and the solution was irradiated in energy of 45 MeV, 5 µA, for 10 minutes. The catalyst was dried at 100 °C for one hour and heated at 300 °C for one hour under a mixed gas of hydrogen and nitrogen (10 volume% of hydrogen, 90 volume% of nitrogen) to provide a catalyst (Pt₃Co) for a fuel cell. The obtained catalyst had an average particle size of 3 nm, a face centred cubic structure, and a lattice constant of a=3.878 A.

### Analyzing Stability of Catalyst Structure

In order to analyze the stability of the catalyst structure, each catalyst obtained from Examples 1 to 3 and Comparative Examples 1 to 3 was agitated in a 1 M sulfuric acid solution for one hour.

From the result, it is understood that each catalyst obtained from Examples 1 to 3 had a very stable structure since the obtained catalyst structure was not broken after the acid treatment. Each catalyst had a highly alloyed and ordered structure, and it is anticipated that Co was less eluted during the acid treatment to maintain the structure. The catalyst obtained from Example 1 had a mixed mole ratio of Pt:Co of 1.8:1 after the acid treatment. Compared to the mixed mole ratio of 1:1 prior to acid treatment, the Pt amount was decreased by about 1.7 %, although the ratio of Co was also decreased.

On the other hand, the structure of each catalyst obtained from Comparative Examples 1 to 3 was broken and distorted, due to an unstable structure. This may be caused by dissolution and removal of a considerable amount of Co during the acid treatment.

In Comparative Example 1, the catalyst was insufficiently alloyed because it was heated at too low of a temperature. The lattice constant was too high at a=3.910 Å, and it did not have the face-centred tetragonal structure. That is, considering the composition ratio, it should have the face-centred tetragonal structure, but instead, it had a face-centred cubic structure, indicating that Co was insufficiently alloyed and was present as free atoms of Co.

In Comparative Example 2, because the catalyst was heated at too high a temperature, excessive Co was present on the surface. Therefore the mole ratio of the catalyst was not about 1:1, due to excessive Co present on the surface. The stability may be deteriorated due to the amount of Co present on the surface.

In the case of Comparative Example 3, the catalyst had an unstable structure instead of the face-centred tetragonal structure because the alloy had a mole ratio of platinum (Pt) and cobalt (Co) of 3:1.

### XRD Pattern Analysis Result

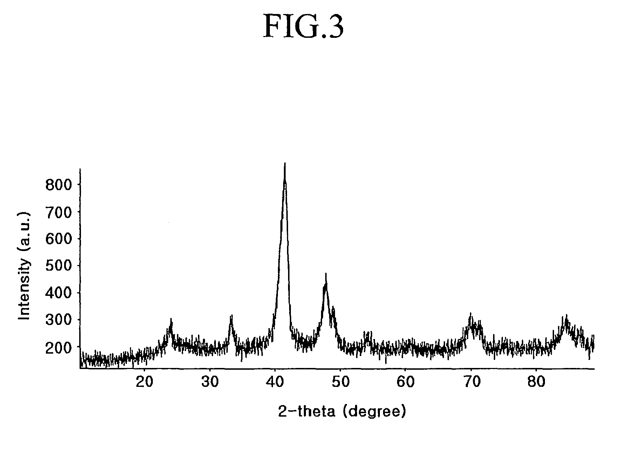

Each catalyst obtained from Examples 1 to 3 and Comparative Examples 1 to 3 was measured for XRD pattern using a Cu-Ka line and the results are shown in FIG. 3 to FIG. 8.

FIG. 3 illustrates a graph showing the XRD pattern of the catalyst obtained from Example 1. Referring to FIG. 3, the catalyst obtained from Example 1 had a peak having a doublet at a 2θ value of 65 to 75 degrees. The platinum-metal alloy had high stability due to the face-centred tetragonal structure.

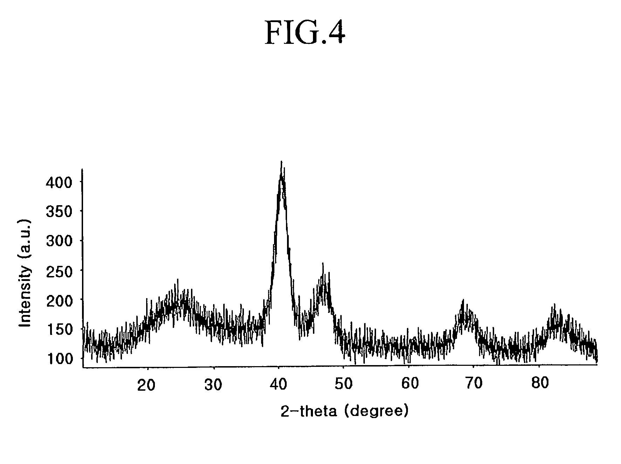

FIG. 4 illustrates a graph showing the XRD pattern of the catalyst obtained from Example 2. Referring to FIG. 4, the catalyst obtained from Example 2 had a doublet at a 2θ value of 65 to 75 degrees. Since the heat treatment temperature was relatively low, the ultra lattice peak was not clearly shown compared to that of FIG. 3. The catalyst had a small particle size.

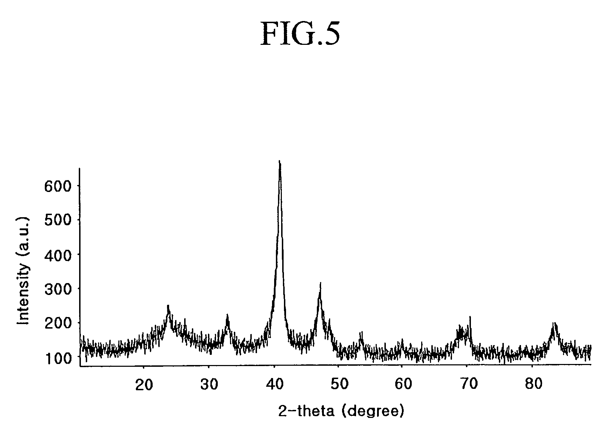

FIG. 5 illustrates a graph showing the XRD pattern of the catalyst obtained from Example 3. Referring to FIG. 5, the diffraction peaks were clearly shown since the catalyst obtained from Example 3 was heated at a high temperature, and it had excellent crystallinity, but a relatively large particle size. That is, it showed a doublet at a 2θ value of 65 to 75 degrees and an ultra lattice peak at 30 to 40 degrees and 50 to 60 degrees.

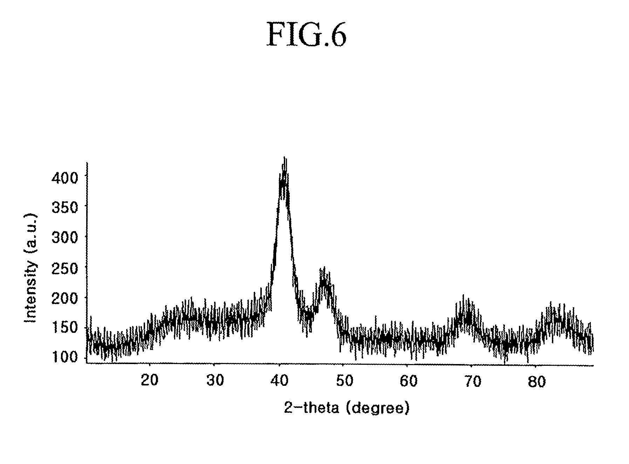

FIG. 6 illustrates a graph showing the XRD pattern of the catalyst obtained from Comparative Example 1. Referring to FIG. 6, it may be seen that the catalyst obtained from Comparative Example 1 had only one peak at a 2θ value of 65 to 75 degrees (full width at half maximum: about 3.8 degrees). In addition, it was randomly alloyed, thereby deteriorating stability. Since the catalyst was heated at an excessively low temperature, thereby deteriorating the crystallinity and decreasing the alloying degree, the lattice constant was a = 3.910 Å.

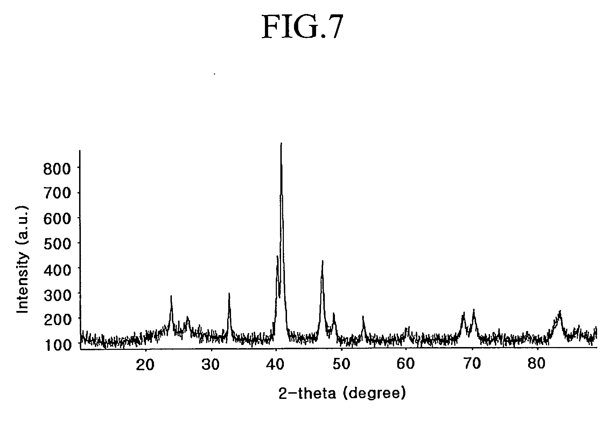

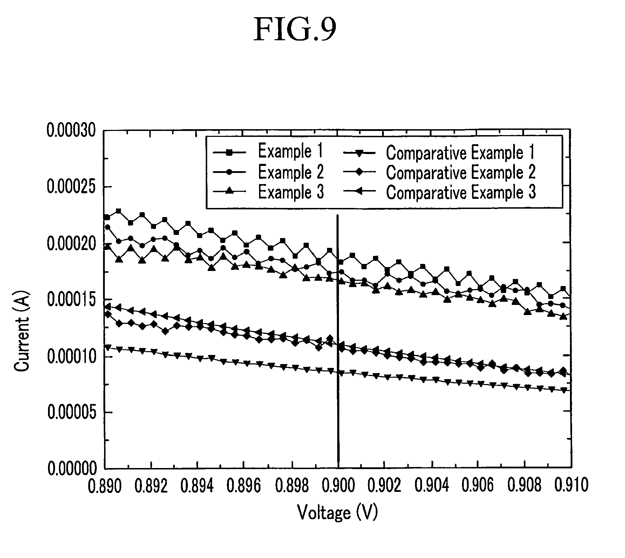

FIG. 7 illustrates a graph showing the XRD pattern of the catalyst obtained from Comparative Example 2. Referring to FIG. 7, the catalyst obtained from Comparative Example 2 had a doublet at a 2θ value of 65 to 75 degrees. The obtained platinum-metal alloy had a face-centred tetragonal structure, so it is understood that it had a high stability. However, the catalyst obtained from Comparative Example 2 had an excessively large particle size, thereby deteriorating catalytic performance (see FIG. 9). Since the particle size was at least about 10 nm, the catalyst active surface area was decreased, thereby deteriorating the performance.

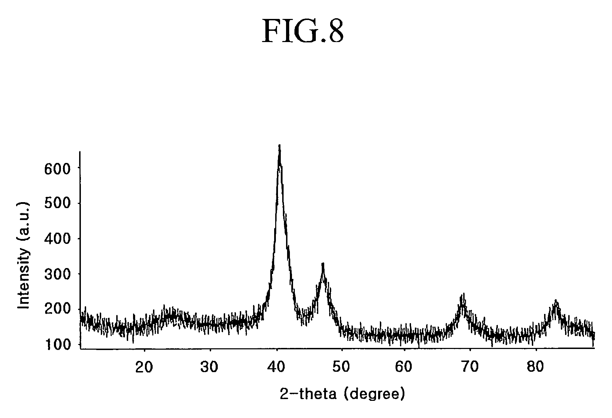

FIG. 8 illustrates a graph showing the catalyst obtained from Comparative Example 3. Referring to FIG. 8, since the catalyst obtained from Comparative Example 3 had a mole ratio of 3:1, it had one peak (full width at half maximum: about 2.5 degrees) instead of a doublet at a 2θ value of 65 to 75 degrees, indicating lower stability.

### Manufacturing Fuel Cell

Each catalyst obtained from Examples 1 to 3 and Comparative Examples 1 to 3 was added to a mixed solvent of water and isopropyl alcohol mixed in a volume ratio of 10:80. Then, 25 parts by weight of a sulfonated tetrafluoroethylene based fluoropolymer-copolymer solution (Nafion 1100 EW, manufactured by Dupont) was mixed therein, and the mixture was treated with ultrasonic waves and uniformly agitated to provide a composition for a catalyst layer.

The obtained composition for a catalyst layer was sprayed on a tetrafluoroethylene (TEFLON)-treated carbon paper substrate (cathode/anode=SGL 31BC/10DA; manufactured by SGL Carbon Group) to provide a cathode. An anode was fabricated using a PtRu black catalyst (HiSPEC 6000, manufactured by Johnson Matthey) in accordance with the same process. For the anode, the catalyst layer was coated in a loading amount of 6 mg/cm², and for the cathode, the catalyst layer was coated in a loading amount of 4 mg/cm².

The electrodes were laminated on respective surfaces of a commercial polymer electrolyte membrane for a fuel cell (catalyst Feated membrane-type fuel cell MEA, manufactured by DuPont; Nafion 115 Membrane) to provide a layer/electrode assembly. The obtained layer/electrode assembly was inserted between gaskets, and inserted between two separators having a gas flow channel and a cooling channel, and then pressed between copper end plates to provide a half-cell.

### Battery Performance Result

Each half cell obtained from Examples 1 to 3 and Comparative Examples 1 to 3 was driven in a sulfuric acid solution, and the battery characteristics were analyzed. The results are illustrated in FIG. 9. FIG. 9 illustrates a voltage-current graph of each fuel cell obtained from Examples 1 to 3 and Comparative Examples 1 to 3.

As illustrated in FIG. 9, it may be seen that each fuel cell obtained from Examples 1 to 3 had a higher current value at the same voltage, particularly, 0.900 V, compared to each Comparative Example, indicating that the performance of the fuel cell was further improved.

Research on alloy catalysts generally concentrate on ways to overcome performance deterioration caused by reducing amounts of platinum. Also, stability may deteriorate when the alloy catalyst is insufficiently alloyed. Particularly, the stability deterioration may be more serious in a polymer electrolyte membrane fuel cell, so developing an alloy catalyst having high stability may be desirable.

Whilst the present invention has been described in connection with certain exemplary embodiments thereof, it is to be understood that the invention is not limited to the disclosed embodiments, but, on the contrary, is intended to cover various modifications and equivalent arrangements included within the scope of the appended claims.

## Claims

1. A catalyst for a fuel cell, comprising:
a binary alloy consisting of platinum and Co and having a face-centred tetragonal structure; and
a carrier, wherein:
the binary alloy shows a broad peak or a doublet at a 2θ value of about 65 to 75 degrees in an XRD pattern using a Cu-Kα line, and
the binary alloy is supported by the carrier and has an average particle size of about 1.5 nm to 5 nm.

2. The catalyst for a fuel cell as claimed in claim 1, wherein the binary alloy includes platinum and Co in a mole ratio of about 0.67:1 to 1.5:1.

3. The catalyst for a fuel cell as claimed in any one of the preceding claims, wherein the binary alloy has an average particle size of about 1.5 nm to 3 nm.

4. The catalyst for a fuel cell as claimed in any one of the preceding claims, wherein the binary alloy has a lattice constant of a = about 3.780 to 3.880 Å and c = about 3.650 to 3.810 Å.

5. The catalyst for a fuel cell as claimed in any one of the preceding claims, wherein the binary alloy is present in an amount of about 20 to 50 wt%, based on the total weight of alloy and carrier.

6. The catalyst for a fuel cell as claimed in any one of the preceding claims, wherein the carrier includes at least one of a carbon-based material and an inorganic particulate, the carbon-based material including at least one of graphite, denka black, ketjen black, acetylene black, carbon nanotubes, carbon nanofiber, carbon nanowire, carbon nanoballs, and activated carbon, and the inorganic particulate including at least one of alumina, silica, zirconia, and titania.

7. The catalyst for a fuel cell as claimed in any one of the preceding claims, wherein the catalyst is used in a polymer electrolyte membrane fuel cell.

8. A fuel cell system, comprising:
a fuel supplier configured to supply a mixed fuel of fuel and water;
a reformer configured to reform the mixed fuel and generate hydrogen gas;
a stack configured to generate electric energy by performing an electrochemical reaction between the hydrogen gas supplied from the reforming part and an oxidizing agent, the stack having a catalyst including a binary alloy as claimed in any one of claims 1 to 7; and
an oxidizing agent supplier configured to supply the oxidizing agent to the reformer and the stack.

9. The fuel cell system as claimed in claim 8, wherein the stack forms a polymer electrolyte membrane fuel cell.

10. A method of preparing the catalyst of claims 1 to 7, comprising:
mixing a platinum raw material and a Co raw material in a solvent to provide a mixture;
adding a carrier to the mixture;
drying the mixture and carrier; and
heating the dried mixture and carrier at a temperature of about 200 °C to 700 °C to produce a catalyst having a face-centred tetragonal structure.

11. The method as claimed in claim 10, wherein heating the dried mixture and carrier includes heating in a gas atmosphere including hydrogen.

12. The method as claimed in claim 11, wherein the gas atmosphere includes about 5 to about 100 volume% of hydrogen.

13. The method as claimed in claims 11 or 12, wherein heating the dried mixture and carrier includes heating under the gas atmosphere including hydrogen for about 0.5 to 10 hours.

## Patentansprüche

1. Katalysator für eine Brennstoffzelle, umfassend:
eine Zweistofflegierung bestehend aus Platin und Co und mit einer flächenzentrierten tetragonalen Struktur; und
einen Träger, wobei:
die Zweistofflegierung eine breite Spitze oder eine Doppellinie bei einem 2θ-Wert von ca. 65 bis 75 Grad in einem XRD-Muster unter Verwendung einer Cu-Ka-Linie zeigt, und
die Zweistofflegierung von dem Träger getragen wird und eine durchschnittliche Teilchengröße von ca. 1,5 nm bis 5 nm aufweist.

2. Katalysator für eine Brennstoffzelle nach Anspruch 1, wobei die Zweistofflegierung Platin und Co in einem Molverhältnis von ca. 0,67:1 bis 1,5:1 enthält.

3. Katalysator für eine Brennstoffzelle nach einem der vorstehenden Ansprüche, wobei die Zweistofflegierung eine durchschnittliche Teilchengröße von ca. 1,5 nm bis 3 nm aufweist.

4. Katalysator für eine Brennstoffzelle nach einem der vorstehenden Ansprüche, wobei die Zweistofflegierung eine Gitterkonstante von a = ca. 3,780 bis 3,880 Å und c = ca. 3,650 bis 3,810 Å aufweist.

5. Katalysator für eine Brennstoffzelle nach einem der vorstehenden Ansprüche, wobei die Zweistofflegierung in einer Menge von ca. 20 bis 50 Gew.-% basierend auf dem Gesamtgewicht der Legierung und des Trägers vorliegt.

6. Katalysator für eine Brennstoffzelle nach einem der vorstehenden Ansprüche, wobei der Träger mindestens eines aus einem Material auf der Basis von Kohlenstoff und einem anorganischen partikelförmigen Material aufweist, wobei das Material auf der Basis von Kohlenstoff mindestens eines aus Graphit, Denkablack, Ketjenblack, Acetylenruß, Kohlenstoff-Nanoröhrchen, Kohlenstoff-Nanofaser, Kohlenstoff-Nanodraht, Kohlenstoff-Nanokugeln und aktiviertem Kohlenstoff enthält, und das anorganische partikelförmige Material mindestens eines aus Aluminiumoxid, Siliciumdioxid, Zirconiumdioxid und Titandioxid enthält.

7. Katalysator für eine Brennstoffzelle nach einem der vorstehenden Ansprüche, wobei der Katalysator in einer Polymer-Elektrolyt-Membran-Brennstoffzelle verwendet wird.

8. Brennstoffzellensystem, umfassend:
eine Brennstoffzuführung, die zum Zuführen eines Mischbrennstoffs aus Brennstoff und Wasser ausgebildet ist;
einen Reformer, der zum Reformieren des Mischbrennstoffs und Erzeugen von Wasserstoffgas ausgebildet ist;
einen Stapel, der zum Erzeugen elektrischer Energie mittels Durchführen einer elektrochemischen Reaktion zwischen dem Wasserstoffgas, das von dem Reformierteil zugeführt wird, und einem Oxidationsmittel ausgebildet ist, wobei der Stapel einen Katalysator enthaltend eine Zweistofflegierung nach einem der Ansprüche 1 bis 7 umfasst; und
eine Oxidationsmittelzuführung, die zum Zuführen des Oxidationsmittels an den Reformer und den Stapel ausgebildet ist.

9. Brennstoffzellensystem nach Anspruch 8, wobei der Stapel eine Polymer-Elektrolyt-Membran-Brennstoffzelle ausbildet.

10. Verfahren zur Herstellung des Katalysators nach den Ansprüchen 1 bis 7, umfassend:
Mischen eines Platinrohmaterials und eines Co-Rohmaterials in einem Lösungsmittel zum Bereitstellen eines Gemisches;
Zugeben eines Trägers zu dem Gemisch;
Trocknen des Gemisches und Trägers; und
Erwärmen des getrockneten Gemisches und Trägers bei einer Temperatur von ca. 200°C bis 700°C zur Herstellung eines Katalysators mit einer flächenzentrierten tetragonalen Struktur.

11. Verfahren nach Anspruch 10, wobei das Erwärmen des getrockneten Gemisches und Trägers das Erwärmen in einer Gasatmosphäre enthaltend Wasserstoff umfasst.

12. Verfahren nach Anspruch 11, wobei die Gasatmosphäre ca. 5 bis ca. 100 Volumen-% Wasserstoff enthält.

13. Verfahren nach den Ansprüchen 11 oder 12, wobei das Erwärmen des getrockneten Gemisches und Trägers das Erwärmen unter der Gasatmosphäre enthaltend Wasserstoff für ca. 0,5 bis 10 Stunden umfasst.

## Revendications

1. Catalyseur pour une pile à combustible, comprenant :
un alliage binaire composé de platine et de Co et présentant une structure tétragonale à faces centrées ; et
un support, dans lequel:
l'alliage binaire présente un pic large ou un doublet à une valeur 2θ d'environ 65 à 75 degrés dans un diagramme de diffraction des rayons X utilisant une ligne Cu-Kα, et
l'alliage binaire est maintenu par le support et présente une taille moyenne de particules d'environ 1,5 nm à 5 nm.

2. Catalyseur pour une pile à combustible tel que revendiqué dans la revendication 1, dans lequel l'alliage binaire comporte du platine et du Co en un rapport moléculaire d'environ 0,67:1 à 1,5:1.

3. Catalyseur pour une pile à combustible tel que revendiqué dans l'une quelconque des revendications précédentes, dans lequel l'alliage binaire présente une taille moyenne des particules d'environ 1,5 nm à 3 nm.

4. Catalyseur pour une pile à combustible tel que revendiqué dans l'une quelconque des revendications précédentes, dans lequel l'alliage binaire a une constante de réseau cristallin a d'environ 3,780 à 3,880 Å et c d'environ 3,650 à 3,810 Å.

5. Catalyseur pour une pile à combustible tel que revendiqué dans l'une quelconque des revendications précédentes, dans lequel l'alliage binaire est présent en une quantité allant d'environ 20 à 50 % en poids sur la base du poids total de l'alliage et du support.

6. Catalyseur pour une pile à combustible tel que revendiqué dans l'une quelconque des revendications précédentes, dans lequel le support comporte au moins l'un d'un matériau à base de carbone et d'une particule inorganique, le matériau à base de carbone comportant au moins l'un parmi du graphite, du noir de denka, du noir de Ketjen, du noir d'acétylène, des nanotubes de carbone, des nanofibres de carbone, des nanofils de carbone, des nanobilles de carbone et du charbon actif, et la particule inorganique comportant au moins l'un parmi l'aluminium, la silice, le zirconium, et le titane.

7. Catalyseur pour une pile à combustible tel que revendiqué dans l'une quelconque des revendications précédentes, dans lequel le catalyseur est utilisé dans une pile à combustible à membrane électrolyte polymère.

8. Système de pile à combustible, comprenant :
un dispositif d'alimentation en combustible configuré pour fournir un combustible mixte composé de combustible et d'eau ;
un reformeur configuré pour réformer le combustible mixte et générer de l'hydrogène gazeux ;
un empilement configuré pour générer de l'énergie électrique en mettant en oeuvre une réaction électrochimique entre l'hydrogène gazeux alimenté à partir de la partie de reformage et un agent oxydant, l'empilement ayant un catalyseur comportant un alliage binaire tel que revendiqué dans l'une quelconque des revendications 1 à 7 ; et
un dispositif d'alimentation en agent oxydant configuré pour alimenter l'agent oxydant au reformeur et à l'empilement.

9. Système de pile à combustible tel que revendiqué dans la revendication 8, dans lequel l'empilement constitue une pile à combustible à membrane électrolyte polymère.

10. Procédé de préparation du catalyseur des revendications 1 à 7, comprenant le fait :
de mélanger un matériau brut à base de platine et un matériau brut à base de Co dans un solvant pour fournir un mélange ;
d'ajouter un support au mélange ;
de sécher le mélange et le support et de chauffer le mélange et le support séchés à une température d'environ 200°C à 700°C pour produire un catalyseur ayant une structure tétragonale à faces centrées.

11. Procédé tel que revendiqué dans revendication 10, dans lequel le chauffage du mélange et du support séchés comporte le chauffage dans une atmosphère gazeuse comportant de l'hydrogène.

12. Procédé tel que revendiqué dans la revendication 11, dans lequel l'atmosphère gazeuse comporte d'environ 5 à environ 100 % en volume d'hydrogène.

13. Procédé tel que revendiqué dans les revendications 11 et 12, dans lequel le chauffage du mélange et du support séchés comporte le chauffage sous l'atmosphère gazeuse comportant de l'hydrogène pendant environ 0,5 à 10 heures.
